# EUROPÄISCHE PATENTSCHRIFT

(11) **EP 0 978 217 B1**
(45) Veröffentlichungstag und Bekanntmachung des Hinweises auf die Patenterteilung: **31.05.2006**
(21) Anmeldenummer: 98925407.3
(22) Anmeldetag: 18.03.1998
(51) Int. Cl.: H04Q 11/04

(54) **VERFAHREN ZUM ERSATZSCHALTEN VON UBERTRAGUNGSEINRICHTUNGEN ZUR BIDIREKTIONALEN ÜBERTRAGUNG VON ATM-ZELLEN**
METHOD FOR CHANGEOVER TO STANDBY OF TRANSMISSION INSTALLATIONS FOR BI-DIRECTIONAL TRANSMISSION OF ATM CELLS
PROCEDE DE COMMUTATION DE SUBSTITUTION D'INSTALLATIONS DE TRANSMISSION POUR LA TRANSMISSION BIDIRECTIONNELLE DE CELLULES MTA

(30) Priorität: 25.04.1997 DE 19717584
(43) Veröffentlichungstag der Anmeldung: 09.02.2000
(73) Patentinhaber: Infineon Technologies AG, 81669 München (DE); SIEMENS AKTIENGESELLSCHAFT, 80333 München (DE)
(72) Erfinder: KLINK, Joachim, D-81369 München (DE); SCHRODI, Karl, D-82538 Geretsried (DE); KLUG, Andreas, D-85551 Kirchheim (DE)
(74) Vertreter: Reinhard - Skuhra - Weise & Partner
(86) Internationale Anmeldenummer: PCT/DE1998/000800
(87) Internationale Veröffentlichungsnummer: WO 1998/049863

(56) Entgegenhaltungen:
- KAI Y ENG ET AL: "MEMORY- AND CHANNEL-SHARING TECHNIQUES FOR CONGESTION CONTROL IN ATM NETWORKS" NETWORKING: FOUNDATION FOR THE FUTURE, SAN FRANCISCO, MAR. 28 - APR. 1, 1993, Bd. VOL. 1, Nr. CONF. 12, 28. März 1993, Seiten 266-273, XP000419741 INSTITUTE OF ELECTRICAL AND ELECTRONICS ENGINEERS
- MAY K P ET AL: "A FAST RESTORATION SYSTEM FOR ATM-RING-BASED LANS" IEEE COMMUNICATIONS MAGAZINE, Bd. 33, Nr. 9, 1. September 1995, Seiten 90-98, XP000528014
- HSING D K ET AL: "A RESTORATION SYSTEM FOR ATM NETWORKS" MILCOM 1996 CONFERENCE PROCEEDINGS CONFERENCE, MCLEAN, VA, OCT. 21 - 24, 1996, Bd. VOL. 2, Nr. 15TH, 22. Oktober 1996, Seiten 483-489, XP000697327 INSTITUTE OF ELECTRICAL AND ELECTRONICS ENGINEERS
- ANDERSON J ET AL: "FAST RESTORATION OF ATM NETWORKS" IEEE JOURNAL ON SELECTED AREAS IN COMMUNICATIONS, Bd. 12, Nr. 1, 1. Januar 1994, Seiten 128-138, XP000493894
- RYUTARO KAWAMURA ET AL: "SELF-HEALING ATM NETWORKS BASED ON VIRTUAL PATH CONCEPT" IEEE JOURNAL ON SELECTED AREAS IN COMMUNICATIONS, Bd. 12, Nr. 1, 1. Januar 1994, Seiten 120-127, XP000493893

## Beschreibung

Die Erfindung betrifft ein Verfahren gemäß dem Oberbegriff des Patentanspruchs 1.

Ein derartiges Verfahren ist bereits in der deutschen Patentanmeldung DE 19646016.6 vorgeschlagen worden.

Dieses bekannte Verfahren bezieht sich auf Übertragungseinrichtungen des asynchronen Transfermodus (ATM). Dort sind Übertragungseinrichtungen zur bidirektionalen Übertragung von ATM-Zellen vorgesehen, bei denen zwei als Endstellen fungierende Vermittlungseinrichtungen über eine Mehrzahl von Betriebsstrecken und lediglich eine Ersatzstrecke miteinander verbunden sind. Die beiden Endstellen enthalten jeweils eine Mehrzahl von Überwachungsvorrichtungen zur Feststellung von Übertragungsstörungen. Eine durch die Überwachungsvorrichtung steuerbare Schaltvorrichtung verbindet eine Empfangsvorrichtung in einen ersten Schaltzustand mit der Betriebsstrecke und in einem zweiten Schaltzustand mit der Ersatzstrecke.

Zwischen den Steuervorrichtungen der beiden Endstellen werden Steuerinformationen ausgetauscht. Die Schaltvorrichtung wird jeweils durch die örtliche Überwachungsvorrichtung in Abhängigkeit: von örtlichen und in den von der Gegenstelle empfangenen Steuerinformationen enthaltenen Steuerkriterien gesteuert. Weiterhin wird gemäß dieser Offenbarung vorgeschlagen, während der Zeit, in der die Ersatzstrecke ungenutzt bleibt, gegebenenfalls Sonderdaten (EXTRA TRAFFIC) der empfangenden Vermittlungseinrichtung zuzuführen.

Welcher Art allerdings diese Sonderdaten beschaffen sind, wird gemäß dieser Offenbarung nicht angesprochen.

Aus der Druckschrift KAI Y ENG et al "Memory and Channel-Sharing Techniques for Congestion Control in ATM Networks", Networking:Foundation for the Future, San Francisco, 28.03.93 Bd. Vol. 1 Nr. Conf 12, Seiten 266-273, IEEE" ist ein Verfahren zum Ersatzschalten von Übertragungseinrichtungen zur bidirektionalen Übertragung von ATM Zellen mit wenigstens zwei Vermittlungseinrichtungen bekannt. Zwischen diesen zwei Vermittlungseinrichtungen sind jeweils eine Mehrzahl von Betriebsstrecken sowie eine Ersatzstrecke angeordnet. Über die Mehrzahl von Betriebsstrecken werden der jeweils empfangenen Vermittlungseinrichtung ATM-Zellen zugeführt,wobei im Ersatzschaltefall auf einer der Betriebsstrecken die hierüber übertragenen ATM-Zellen über die Ersatzstrecke übertragen werden. Gegebenenfalls können über die Ersatzstrecke auch Sonderdaten übertragen werden. Wie diese Sonderdaten aber ausgebildet sind, wird hier nicht angesprochen.

Der Erfindung liegt die Aufgabe zugrunde, einen Weg aufzuzeigen, wie Sonderdaten in effizienter Weise über eine Mehrzahl von Netzknoten übertragen werden können.

Die Erfindung wird ausgehend von den im Oberbegriff des Patentanspruchs 1 angegebenen Merkmale durch dessen kennzeichnende Merkmale gelöst.

Vorteilhaft an der Erfindung ist insbesondere, daß lediglich eine Ersatzstrecke vorgesehen wird,die einer Mehrzahl von Betriebsstrecken zugeordnet ist. Über diese Ersatzstrecke werden die ATM-Zellen der gestörten Betriebsstrecke übertragen. Im störungsfreien Fall werden gegebenenfalls Sonderdaten über diese Ersatzstrecke übertragen. Dabei sind die Sonderdaten als Verkehrsdaten ausgebildet, mit denen gegebenenfalls eine Mindestbitrate garantiert wird. Damit ist der Vorteil einer dynamischen Entlastung der Betriebsstrecken verbunden.

Vorteilhafte Weiterbildungen der Erfindung sind in den Unteransprüchen angegeben.

Die Erfindung wird im folgenden anhand eines Ausführungsbeispiels näher erläutert.

Es zeigen:
- Figur 1: das erfindungsgemäße Verfahren zur bidirektionalen Übertragung von ATM-Zellen in einer 1:n-Struktur,
- Figur 2: eine spezielle Ausgestaltung des erfindungsgemäßen
- Figur 3: eine weitere spezielle Ausgestaltung des erfindungsgemäßen Verfahrens in einer 1+1-Struktur.
- Figur 4: die verwendeten Prioritäten, nach deren Maßgabe die Ersatzschaltung erfolgt.

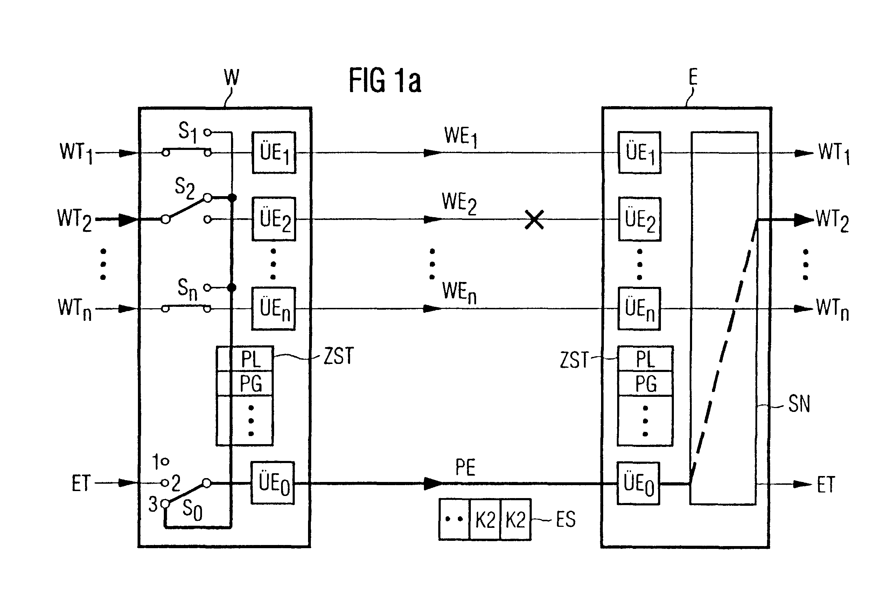

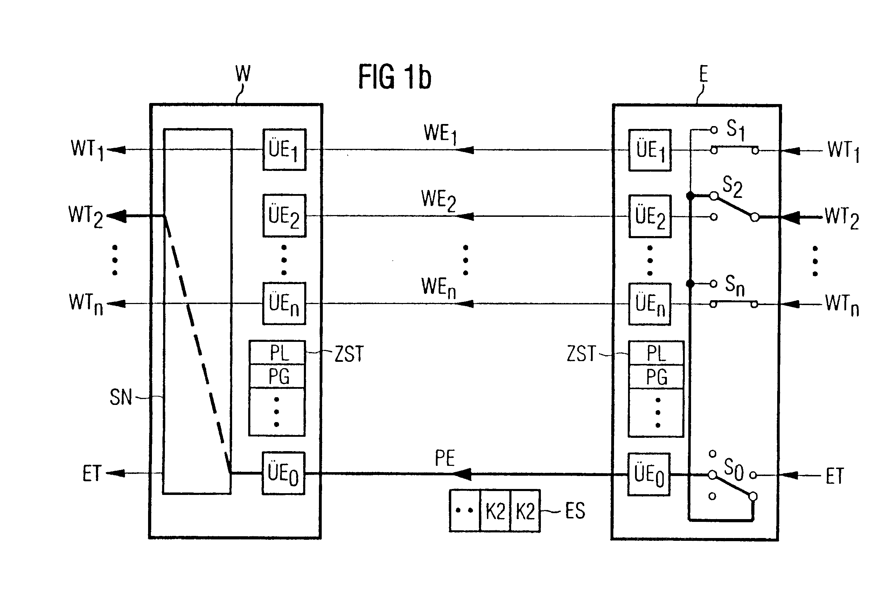

Gemäß Fig. 1 sind zwei Knoten eines ATM-Netzes aufgezeigt, welche jeweils als Vertnittlungseinrichtung W, E ausgebildet sind. In vorliegendem Ausführungsbeispiel wird davon ausgegangen, daß es sich bei diesen Vermittlungseinrichtungen um Cross Connect vermittlungseinrichtungen handelt. Die Verwendung derart ausgebildeter Vermittlungseinrichtungen bedeutet jedoch keine Einschränkung der Erfindung, andere Vermittlungseinrichtungen sind ebenso verwendbar. In Fig. la ist die Übertragung von ATM-Zellen von der Vermittlungseinrichtung W zur Vermittlungseinrichtung E hin aufgezeigt, während in Fig. 1b die Rückrichtung dieser Verbindung offenbart ist.

Die Vermittlungseinrichtungen W, E sind über Betriebsstrecken WE₁...WEₙ (WORKING ENTITY) sowie lediglich eine Ersatzstrecke PE (PROTECTION ENTITY) miteinander verbunden sind. Weiterhin sind Schaltereinrichtungen S₀...Sₙ (BRIDGE) aufgezeigt, über die die ankommenden ATM-Zellen und die zugehörigen Betriebsstrecken WE₁...WEₙ zur Vermittlungseinrichtung E hin übertragen werden. Die ATM-Zellen werden nach einem asynchronen Transfermodus übertragen und weisen jeweils einen Kopfteil sowie einen Informationsteil auf. Der Kopfteil dient der Aufnahme von Verbindungsinformation während der Informationsteil der Aufnahme von Nutzinformation dienlich ist. Die im Kopfteil enthaltene Verbindungsinformation ist als logische Information ausgebildet und wird in der Regel als virtuelle Pfadnummer VPI bzw. virtuelle Kanalnummer VCI ausgebildet.

Weiterhin sind Fig. 1 Selektionseinrichtungen SN entnehmbar, deren Aufgabe darin besteht, die über die Betriebsstrecken WE₁....WEₙ übertragenen ATM-Zellen dem Ausgang der Vermittlungseinrichtung E zuzuführen. Gemäß vorliegendem Ausführungsbeispiel sind die Selektionseinrichtungen SN als ATM-Koppelfeld ausgebildet. Das ATM-Koppelfeld SN ist sowohl in der Vermittlungseinrichtung W als auch der Vermittlungseinrichtung E enthalten.

Weiterhin sind in beiden Vermittlungseinrichtungen W, E Überwachungsvorrichtungen ÜE₀...ÜEₙ (PROTECTION DOMAIN SINK, PROTECTION DOMAIN SOURCE) aufgezeigt, die den Zustand bzw. die Qualität der über die Betriebstrecken WE₁...WEₙ übertragenen ATM-Zellen überwachen. Beispielsweise werden die ATM-Zellen der Verbindung mit der Nummer 1 WT₁ bevor sie über die Betriebsstrecke WE₁ zur Vermittlungseinrichtung E hin übertragen werden, in der Überwachungseinrichtung ÜE₁ der Vermittlungsei.nrichtung W mit Steuerinformation versehen, die die Überwachungseinrichtung ÜE₁ der empfangenden Vermittlungseinrichtung E entnimmt und überprüft. Anhand dieser Steuerinformation kann dann ermittelt werden, ob die Übertragung der ATM-Zelle korrekt erfolgt ist oder nicht. Insbesondere kann hier ein Totalausfall (SIGNAL FAIL FOR WORKING ENTITY) einer der Betriebsstrecken WE₁...WEₙ ermittelt werden. Ebenso sind aber auch unter Verwendung bekannter Verfahren Verschlechterungen in der Übertragungsqualität (SIGNAL DEGRADE) ermittelbar.

Die Überwachungsvorrichtungen ÜE₁...ÜEₙ schließen die Betriebsstrecken WE₁...WEₙ auf beiden Seiten ab. Weitere Überwachungsvorrichtungen ÜE₀ sind auf beiden Enden der Ersatzstrecke PE angeordnet. Diese soll im Fehlerfall als Übertragungsstrecke für die außer Betrieb genommene Betriebsstrecke WEₓ dienen. Weiterhin werden hierüber Ersatzschalteprotokolle ES übertragen, so daß die Intaktheit der Ersatzstrecke oberste Priorität hat.

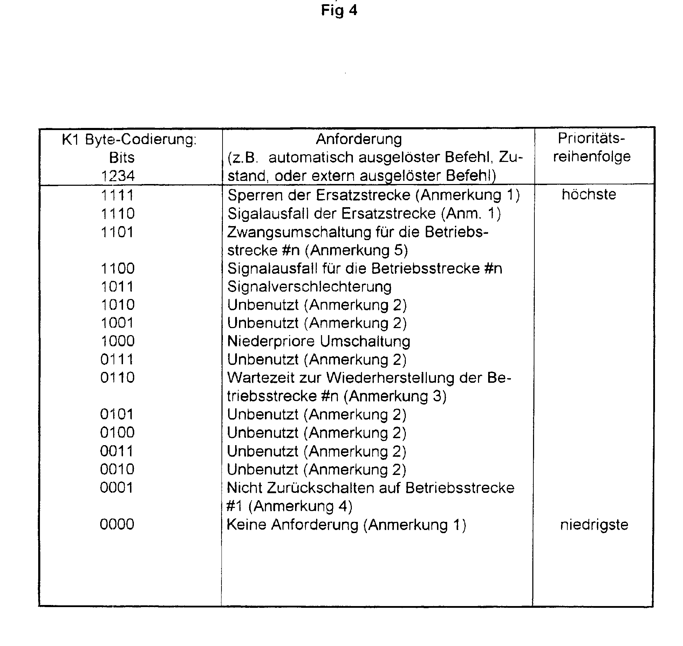

In jeder der Vermittlungseinrichtungen W, E sind ferner zentrale Steuereinrichtungen ZST angeordnet. Diese beinhalten jeweils Prioritätstabellen PG, PL. Bei den Prioritätstabellen PL handelt es sich um lokale Prioritätstabellen, in denen der Zustand und Priorität der lokalen Vermittlungseinrichtung abgespeichert ist. Bei den Prioritätstabellen PG handelt es sich um globale Prioritätstabellen, in den Zustand und Priorität der lokalen aber auch verbleibenden Vermittlumngseinrichtung ist. Durch die Einführung der Prioritäten wird erreicht, daß beim gleichzeitigen Auftreten mehrerer Ersatzschalteanforderungen festgelegt ist, welche Betriebstrecke ersatzgeschaltet wird. Ebenso sind in den Prioritätstabellen die Ersatzschalteanforderungen priorisiert. So besteht beispielsweise eine hochpriore Anforderung von einem Anwender. Da dieser Ersatzschalteanforderung eine hohe Priorität zugewiesen ist, wird sie somit bevorzugt gesteuert. Eine von einer der Betriebsstrecken gesteuerte Ersatzschalteanforderung wird somit zurückgewiesen. Die einzelnen Prioritäten sind in Fig. 4 aufgezeigt.

Hierbei ist zu beachten, daß in dem Fall, in dem mehr als eine Anforderung derselben Priorität, die in Fig. 4 aufgelistet sind, gleichzeitig aktiv sind, die Anfor-derung mit der niedrigsten Streckennummer vorrangig behandelt werden sollte. Aus diesem Grund verdrängt eine Anforderung (z.B. Signalverschlechterung für die Ersatzstrecke (#0) dieselbe Anforderung für jede andere Betriebsstrecke (#1 bis #n), und eine Anforderung für die Betriebsstrecke #k verdrängt dieselbe Anforderung für jede andere Betriebs-strecke mit der Streckennummer größer als k.

Zu Fig. 4 sei erläuternd angemerkt
- Anmerkung 1 - Eine K1 Bit 5-8-Codierung von "0000" wird nur zugelassen, wenn keine Anforderung, Sperren der Ersatzstrecke und Signalausfall der Ersatzstrecke vorliegt
- Anmerkung 2 - Diese Codierungen werden vom Empfänger ignoriert
- Anmerkung 3 - Die Wartezeit zur Wiederherstellung der Betriebsstrecke #n ist nur im revertiven Betriebsmodus anwendbar
- Anmerkung 4 - Die Anforderung "Nicht Zurückschalten auf Betriebsstrecke #1" ist nur im nicht revertiven Betriebsmodus anwendbar; hier wird nur eine K1 Bit 5-8 Codierung von "0001" zugelassen
- Anmerkung 5 - Eine Zwangsumschaltung der Ersatzstrecke (#0) wird nicht definiert, da diese Funktion über den Befehl "Sperrung der Ersatzstrecke" erreichbar ist

Die zentralen Steuereinrichtungen ZST der Vermittlungseinrichtungen W, E tauschen Informationen in einem Ersatzschalteprotokoll ES aus. Dieses Protokoll wird über die Ersatzstrecke PE übertragen und von der zugeordneten Überwachungseinrichtung ÜE₀ der jeweils empfangenden Vermittlungseinrichtung entnommen, und der betreffenden zentralen Steuereinrichtung ZST zugeführt. Weiterhin wird in der zentralen Steuervorrichtung ZST dafür Sorge getragen, daß im Fehlerfall die Schaltvorrichtungen S₀...Sₙ in entsprechender Weise gesteuert werden.

Im Protokoll ES sind Informationen K2 abgelegt. Dabei handelt es sich um Informationen bezüglich der momentanen Zustände der Schaltvorrichtungen. Weiterhin sind noch Informationen K1 abgelegt. Dabei handelt es sich um Informationen bezüglich der generierten Ersatzschalteanforderung. Das Protokoll wird jeweils bei Generierung der Ersatzschalteanforderung zwischen den beiden Vermittlungseinrichtungen ausgetauscht. In einer speziellen Ausgestaltung der Erfindung wird vorgesehen, das Protokoll ES zyklisch zwischen beiden Vermittlungseinrichtungen zu übertragen.

Im folgenden wird nun die Durchführung des erfindungsgemäßen Verfahrens anhand Fig. 1 näher erläutert. Dabei ist gemäß Fig. la die Übertragung der ATM-Zellen von der Vermittlungseinrichtung W zur Vermittlungseinrichtung E über die Betriebsstrecken WE₁...WEₙ aufgezeigt. In Fig. 1b ist die zugehörige Gegenrichtung (bidirektionale Übertragung) erläutert. Gemäß dem vorliegenden Ausführungsbeispiel wird nun zunächst davon ausgegangen, daß die Betriebstrecken WE₁...WEₙ noch intakt sind und die ankommenden ATM-Zellen korrekt übertragen.

Gemäß Fig. 1a werden die ATM-Zellen der Vermittlungseinrichtung W zugeführt. Die ATM-Zellen gehören dabei einer Vielzahl von Verbindungen WT₁...WTₙ an. Die einzelnen Verbindungen werden anhand der im Kopfteil der ATM-Zellen eingetragenen logischen Verbindungsnummer VPI unterschieden.

Die Schaltvorrichtungen S₁...Sₙ der Vermittlungseinrichtung W sind in diesem (noch intakten) Betriebsfall derart geschaltet, daß die ATM-Zellen den Überwachungseinrichtungen ÜE₁... ÜEₙ unmittelbar zugeführt werden. In letzteren werden die ATM-Zellen mit den bereits angesprochenen Steuerinformationen beaufschlagt und über die in Frage kommende Betriebsstrecke WE₁...WEₙ den Überwachungseinrichtungen ÜE₁... ÜEₙ der empfangenden. Vermittlungseinrichtung E zugeführt. Dort wird die mitgeführte Steuerinformation überprüft und gegebenenfalls ein Fehlerfall ermittelt. Ist die Übertragung korrekt erfolgt, werden die ATM-Zellen dem ATM-Koppelfeld SN zugeführt. Hier wird die logische Verbindungsinformation VPI ausgewertet und nach Maßgabe dieser Auswertung die ATM-Zelle über dem in Frage kommenden Ausgang des Koppelfeldes SN in das ATM Netz weitergeleitet.

Die Ersatzstrecke PE kann während dieser Zeit ungenutzt bleiben. Gegebenenfalls können aber auch während dieser Zeit Sonderdaten (EXTRA TRAFFIC) der Vermittlungseinrichtung E zugeführt werden. Die Schaltvorrichtung S₀ der Vermittlungseinrichtung W nimmt also die Stellungen 1 oder 3 ein. Die Übertragung der Sonderdaten erfolgt ebenfalls in ATM-Zellen. Die Überwachungseinrichtung ÜE₀ der der Vermittlungseinrichtung W beaufschlagt die ATM-Zellen in gleicher Weise mit Steuerinformationen wie dies im Falle der über die Betriebsstrecken WE₁...WEₙ bereits geschildert wurde. Ebenso erfolgt die Überwachung der Strecke.

Im folgenden wird nun davon ausgegangen, daß die Betriebsstrecke WE₂ ausgefallen ist. Dies wird von der dieser zugeordneten Überwachungseinrichtung ÜE₂ der empfangenden Vermittlungseinrichtung E ermittelt. Die Ersatzschalteanforderung K1 wird nun zur betreffenden zentralen Steuereinrichtung ZST übermittelt, und dort in der lokalen Prioritätstabelle PL sowie der globalen Prioritätstabelle PG abgelegt.

Nach Maßgabe der in der globalen Prioritätstabelle PG abgespeicherten Prioritäten wird nun ermittelt, ob noch höher priore Anforderungen anstehen. Dies könnte beispielsweise die bereits angesprochene Umschalteanforderung des Anwenders (FORCED SWITCH FOR WORKING ENTITY) sein. Auch bei gleichzeitigem Auftreten anderer Störungsfalle wie beispielsweise der Betriebsstrecke WE₁ wäre die Ersatzschaltung dieser Betriebsstrecke bevorzugt zu behandeln, da dieser Betriebsstrecke eine höhere Prioität zugewiesen ist. In diesem Fall wird eine höher priorisierte Anforderung zuerst behandelt. Die in der lokalen und globalen Prioritätstabelle PL, PG gespeicherten Prioritäten sind in Fig. 4 aufgezeigt.

Sind keine höher priorisierte Anforderungen vorhanden, wird die Schaltvorrichtung S₂ der Vermittlungseinrichtung E in den verbleibenden Betriebszustand gesteuert, wie in Fig. 1b aufgezeigt. Im folgenden wird nun das Ersatzschalteprotokoll Es über die Ersatzstrecke PE der Vermittlungseinrichtung W zugeführt. In diesem Ersatzschalteprotokoll sind die bereits angesprochenen Informationen K1 und K2 enthalten. Wesentlich ist, daß die lokale Prioritätslogik die Ausgestaltung der Information K1 definiert, und die globale Prioritätslogik die Stellung der Schaltvorrichtung S₀.

Von der Überwachungseinrichtung ÜE₀ der Vermittlungseinrichtung E wird nun das Ersatzschalteprotokoll ES übernommen und der zentralen Steuereinrichtung ZST der Vermittlungseinrichtung W zugeführt.Liegen auch hier in der globalen Prioritätstabelle PG keine weiteren höherpriorisierten Anforderungen an, so wird auch hier die Schaltvorrichtung S₂ in entsprechender Weise angesteuert und eingestellt. Weiterhin wird die Schaltvorrichtung S₀ der Vermittlungseinrichtung W ebenfalls umgelegt. Der neue Status der beiden Schaltvorrichtungen S₀, S₂ wird der Vermittlungseinrichtung E quittiert, und in der dortigen globalen Prioritätstabelle PG aktualisiert. Die ATM-Zellen der Verbindung WT₂ werden somit über die Ersatzstrecke PE der Vermittlungseinrichtung E zugeführt.

Die Selektionseinrichtung SN der Vermittlungseinrichtung E ist als ATM Koppelfeld ausgebildet. Die über die Ersatzstrecke PE geleiteten ATM-Zellen werden diesem koppelfeld mzugeführt. Hier wird nun die logische Pfadnummer VPI dem Zellenkopf entnommen und ausgewertet und durch das Koppelfeld durchgeroutet. Das Ansteuern von Schalteinrichtungen entfällt somit in diesem Fall.

Da es sich bei diesen Verbindungen um eine bidirektionale Verbindung handelt, muß auch für die Übertragung der ATM-Zellen der Rückwärtsrichtung Sorge getragen werden. Dies erfolgt gemäß Fig. 1b in gleicher Weise, wie soeben für die Übertragung der ATM-Zellen von der Vermittlungseinrichtung W zur Vermittlungserinrichtung E hin geschildert wurde.

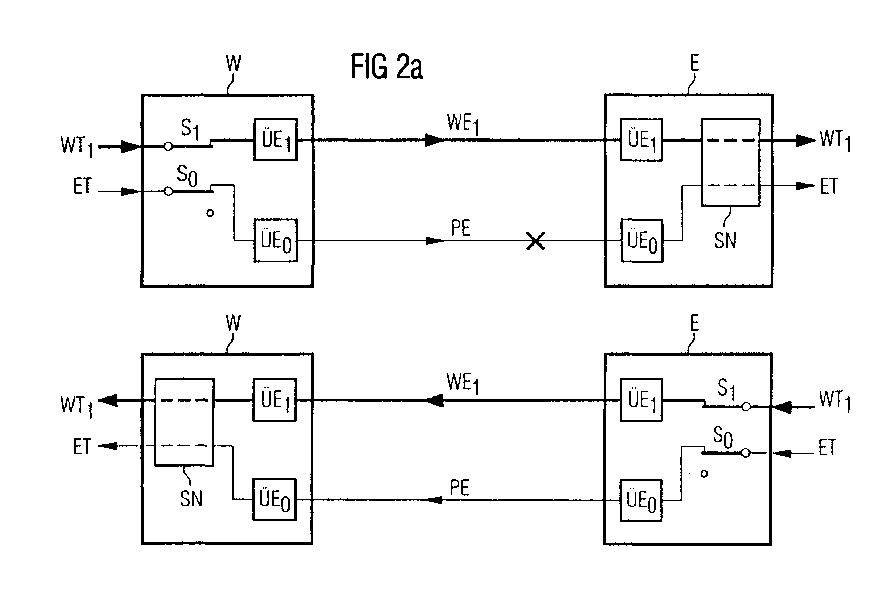

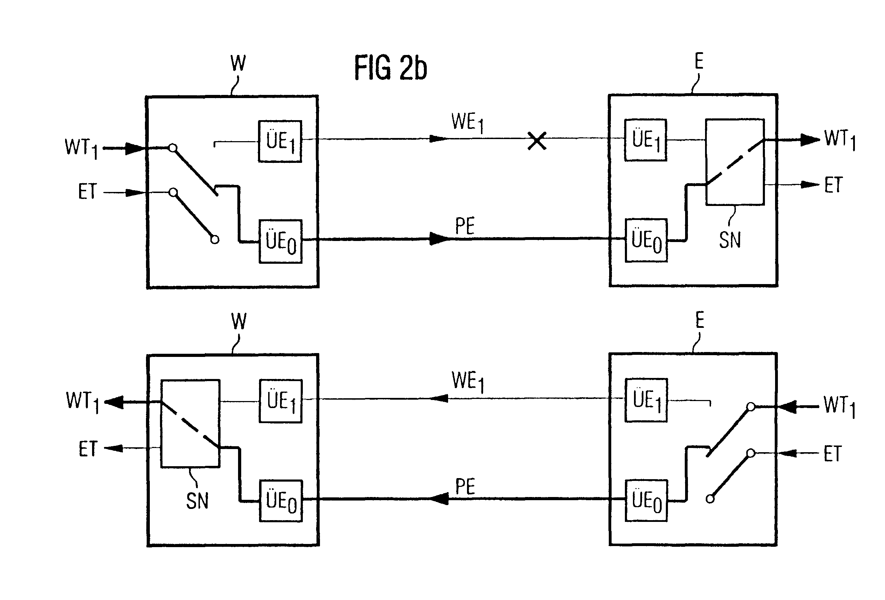

Gemäß dem soeben beschriebenen Ausführungsbeispiel wurde von einer 1:n Struktur ausgegangen. Dies bedeutet, daß für n Betriebsstrecken lediglich eine Ersatzstrecke zur Verfügung steht. Ein Spezialfall ist also dann gegeben, wenn n=1 gilt. In diesem Fall wird also eine 1:1 Struktur verwendet. Die entsprechenden Verhältnisse sind in Fig. 2 aufgezeigt.

Auch in diesem Fall ist die Selektionseinrichtung als ATM-Koppelgeld ausgebildet, so daß ein Durchschalten nach Maßgabe der VPI Nummer erfolgt. In den Vermittlungseinrichtungen gemäß Fig. 2 sind ebenso - nicht aufgezeigte - zentrale Steuereinrichtungen mit lokalen und globalen Prioritätstabellen enthalten.

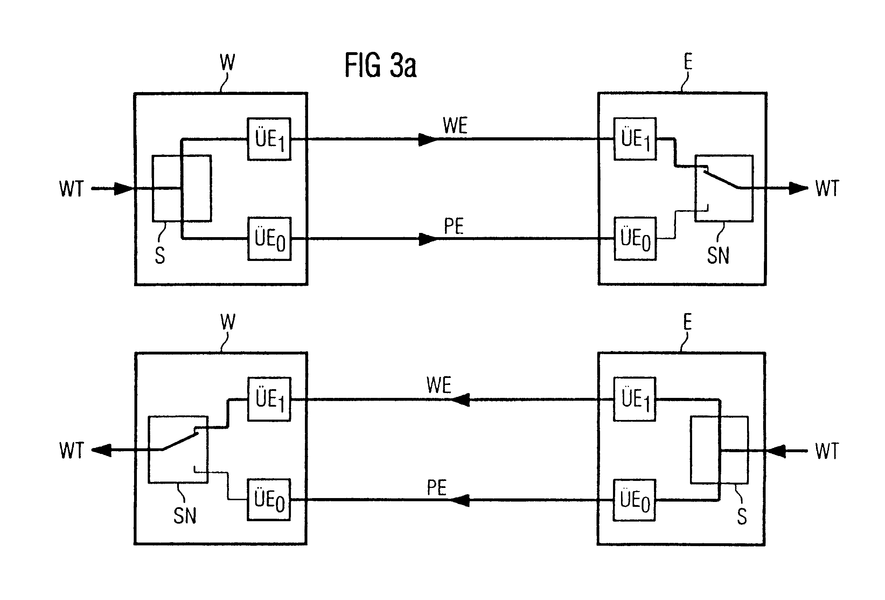

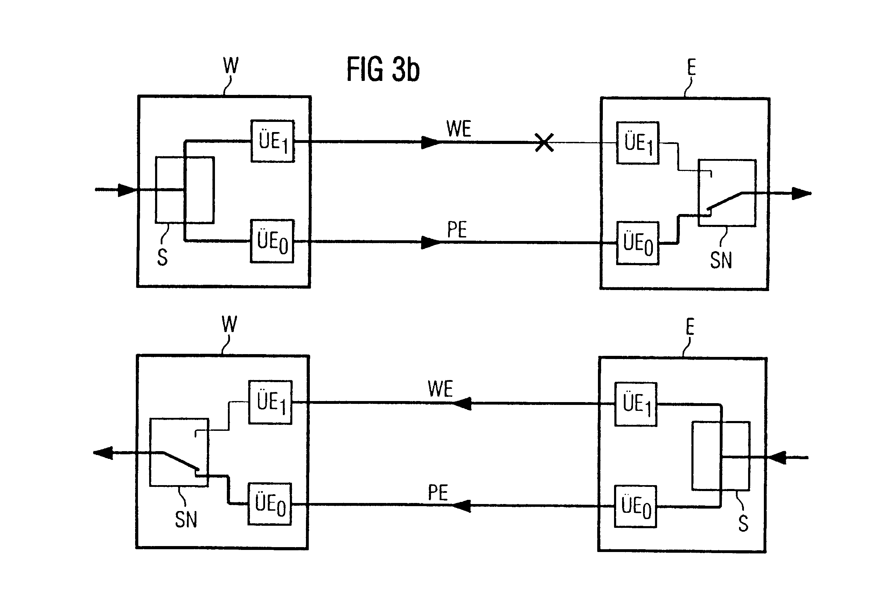

Eine weitere Ausgestaltung der Erfindung ist in Fig. 3 aufgezeigt. Dabei handelt es sich um eine 1+1 Struktur. Diese Struktur ergibt sich aus der 1:n Struktur, indem die Schaltvorrichtungen S fest eingestellt werden und nicht mehr über die zentralen Steuervorrichtungen ZST steuerbar sind. Damit werden die ATM-Zellen auch im störungsfreien Betriebsfall sowohl über die Betriebsstrecke WE als auch die Ersatzstrecke PE geleitet. Die Selektionseinrichtung SN ist hier nicht als ATM-Koppelfeld ausgebildet, sondern als Schaltvorrichtung. Das Ersatzschalteprotokoll ES nimmt in diesem Fall eine einfachere Form an. Die Informationen K2 beschreiben hier den Zustand der Selektionsvorrichtung. Immer dann, wenn im Falle der 1:n Struktur die Schaltvorrichtungen S₀...Sₙ gesteuert wurden, wird im Falle der 1+1 Strukur stattdessen die Selektionsvorrichtung SN gesteuert.

Wie bereits eingangs angesprochen, wird vorgesehen, die Ersatzstrecke PE während der Zeit, in denen ein ungestörter Betriebsfall vorliegt, ungenutzt bleiben zu lassen. Gegebenenfalls können aber auch während dieser Zeit Sonderdaten (EXTRA TRAFFIC) der Vermittlungseinrichtung E zugeführt werden. Damit wird die Dynamik des Systems erhöht. Als Sonderdaten können dabei ABR-Verkehrsdaten (Available Bit Rate) oder UBR-Verkehrsdaten (Unspecified Bit Rate) verwendet werden. Diese sind z. B. im ATM Forum "Traffic Management Specification", Version 4.0 definiert.

Demgemäß wird unter ABR/ UBR-Verkehr insbesondere speziell festgelegte Verkehrsklassen verstanden. Die ABR Verkehrsklasse ist dabei derart definiert, daß die Übertragung der zugehörigen Verkehrsdaten unter Garantie einer minimalen Bandbreite (Minimum Cell Rate, MCR) vorgenommen wird. Die verbleibende Bandbreite wird gegebenenfalls je nach Auslastungsgrad der Knoten geregelt (Quality of Servive). Bei der UBR Verkehrsklasse wird keinerlei Garantie für die Übertragungsgüte (Quality of Servive) übernommen. Ebenso wird keine untere Bandbreite garantiert. Damit ist aber die Übertragung von Datenverkehr allgemeiner Art durchaus tolerierbar. Beiden Verkehrsklassen wird weiterhin eine Priorität zugewiesen.

Die im störungsfreien Betriebsfall über die Ersatzstrecke PE gesteuerte Übertragung der ABR/ UBR Verkehrsdaten muß im Ersatzschaltefall nicht unbedingt unterbrochen werden. Dies hat seinen Grund darin, daß die derart ausgebildeten Verkehrsdaten niederproirer sind als die ersatzgeschalteten Verkehrsdaten und somit auomatisch je nach Priorität verdrängt werden. In diesem Fall wird allerdings der eventuell vorhandene ABR/ UBR Verkehr auf der ausgefallenen Betriebsstrecke WE₁...WEₙ nicht mehr mit höherer Priorität behandelt als der ABR/ UBR Verkehr auf der Ersatzstrecke PE. Dabei muß im Ersatzschaltefall sichergestellt sein, daß die Summe der garantierten Bandbreiten inclusiv der garantierten minimalen Bandbreite die Kapazität der Ersatzstrecke nicht überschreitet.

Die Übertragung der ABR/ UBR Verkehrsdaten auf der Ersatzstrecke PE muß nicht zwingend zwischen den Vermittlungseinrichtungen W, E erfolgen. Vielmehr könnte die Übertragung auch über lediglich einen Teilabschnitt der Ersatzstrecke PE erfolgen. Ein derartiges Ein/ bzw. Auskoppeln könnte dann über über weitere, beispielsweise als Cross-Connect Schalteinrichtungen ausgebildete Vermittlungseinrichtungen, die zwischen den Vermittlungseinrichtungen W, E angeordnet sind, vorgenommen werden. Weiterhin kann die Bandbreite der ABR/UBR Verkehrsdaten auf der Ersatzstrecke PE sich beliebig auf viele andere virtuelle Pfade/Kanäle verteilen (Routenfreiheit).

## Patentansprüche

1. Verfahren zum Ersatzschalten von Übertragungseinrichtungen zur bidirektionalen Übertragung von ATM-Zellen, mit wenigstens zwei Vermittlungseinrichtungen (W, E) die jeweils einen aus einer Mehrzahl von Betriebsstrecken (WE₁...WEₙ) gebildeten Übertragungsabschnitt abschließen, und die Informationen in ATM-Zellen über die Mehrzahl von Betriebsstrecken (WE₁... WEₙ) der jeweils empfangenden Vermittlungseinrichtung (W, E) zuführen sowie mit einer Ersatzstrecke (PE), die zwischen den beiden Vermittlungseinrichtungen (W, E) angeordnet ist,und über die im Falle einer Störung auf einer der Betriebsstrecken (WE₁...WEₙ) die hierüber übertragen ATM-Zellen übertragen und über die im störungsfreien Betriebsfall gegebenenfalls Sonderdaten übertragen werden,
**dadurch gekennzeichnet,**
**daß** die Sonderdaten als Verkehrsdaten (ABR, UBR) ausgebildet sind, mit denen gegebenenfalls eine Mindestbitrate garantiert wird, wobei die Übertragung der Sonderdaten im Ersatzschaltefall nicht unterbrochen wird.

2. Verfahren nach Anspruch 1,
**dadurch gekennzeichnet,**
**daß** im Ersatzschaltefall sichergestellt ist, daß die Summe der garantierten Bandbreiten die Kapazität der Ersatzstrecke (PE) nicht überschritten wird.

3. Verfahren nach Anspruch 1,
**dadurch gekennzeichnet,**
**daß** die Verkehrsdaten gegebenenfalls über einen Teilabschnitt der Ersatzstrecke (PE) übertragen werden.

4. Verfahren nach Anspruch 1 bis 3,
**dadurch gekennzeichnet,**
**daß** die Bandbreiten der Verkehrsdaten auf der Ersatzstrecke (PE) in vielfältiger Weise auf andere virtuelle Pfade/ Kanäle aufteilbar sind.

5. Verfahren nach einem der Ansprüche 1 bis 4,
**dadurch gekennzeichnet,**
**daß** die Vermittlungseinrichtungen als Crossconnect-Schalteinrichtungen ausgebildet sind.

## Revendications

1. Procédé de commutation sur voie de secours de dispositifs de transmission pour la transmission bidirectionnelle de cellules ATM, avec au moins deux dispositifs de commutation (W, E) qui terminent chacun un tronçon de transmission formé d'une multiplicité de voies d'exploitation (WE₁ à WEₙ) et qui envoient des informations dans des cellules ATM par l'intermédiaire de la multiplicité de voies d'exploitation (WE₁ à WEₙ) au dispositif de commutation (W, E) respectivement récepteur ainsi qu'avec une voie de secours (PE) qui est agencée entre les deux dispositifs de commutation (W, E) et par l'intermédiaire de laquelle, en cas de perturbation sur l'une des voies d'exploitation (WE₁ à WEₙ), les cellules ATM transmises sur celles-ci sont transmises et par l'intermédiaire de laquelle, en cas de fonctionnement sans perturbation, des données particulières sont éventuellement transmises,
**caractérisé en ce que** les données particulières sont conçues comme des données de trafic (ABR, UBR) avec lesquelles un débit binaire minimal est éventuellement garanti, la transmission des données particulières n'étant pas interrompue en cas de commutation sur voie de secours.

2. Procédé selon la revendication 1,
**caractérisé en ce que**, en cas de commutation sur voie de secours, on s'assure que la somme des largeurs de bande garanties ne dépasse pas la capacité de la voie de secours (PE).

3. Procédé selon la revendication 1,
**caractérisé en ce que** les données de trafic sont éventuellement transmises par l'intermédiaire d'un tronçon partiel de la voie de secours (PE).

4. Procédé selon l'une des revendications 1 à 3,
**caractérisé en ce que** les largeurs de bande des données de trafic sur la voie de secours (PE) peuvent être réparties de nombreuses façons sur d'autres chemins / canaux virtuels.

5. Procédé selon l'une des revendications 1 à 4,
**caractérisé en ce que** les dispositifs de commutation sont conçus comme des dispositifs d'interconnexion cross-connect.

## Claims

1. Method for switching transmission devices to an equivalent circuit for the bidirectional transmission of ATM cells, having at least two switching centres (W, E) which each terminate a transmission section formed from a plurality of service links (WE₁... WEₙ) , and feed the information in ATM cells to the respective receiving switching centre (W, E) on the plurality of service links (WE₁...WEₙ), and having a standby link (PE) which is arranged between the two switching centres (W, E) and on which the ATM cells which are transmitted on the service links (WE₁...WEₙ) are transmitted in the event of a fault on one of said links and on which, if appropriate, special data are transmitted during fault-free operation, **characterized in that** the special data are configured as traffic data (ABR, UBR) with which, if appropriate, a minimum bit rate is guaranteed, the transmission of the special data not being interrupted in the case of standby operation.

2. Method according to Claim 1, **characterized in that** in the case of standby operation it is ensured that the total of the guaranteed bandwidths is not exceeded the capacity of the standby link (PE).

3. Method according to Claim 1, **characterized in that** the traffic data are, if appropriate, transmitted on a section of the standby link (PE).

4. Method according to Claim 1 to 3, **characterized in that** the bandwidths of the traffic data on the standby link (PE) can be divided in various ways among other virtual paths/channels.

5. Method according to one of Claims 1 to 4, **characterized in that** the switching centres are embodied as cross-connect switching devices.
